# EUROPÄISCHE PATENTSCHRIFT

(11) **EP 2 383 134 B1**
(45) Veröffentlichungstag und Bekanntmachung des Hinweises auf die Patenterteilung: **17.04.2013**
(21) Anmeldenummer: 11003310.7
(22) Anmeldetag: 20.04.2011
(51) Int. Cl.: B60J 7/12

(54) **Führung für eine Innenverkleidung**
Guide for a trim cover
Guidage pour un habillage intérieur

(30) Priorität: 30.04.2010 DE 102010018925
(43) Veröffentlichungstag der Anmeldung: 02.11.2011
(73) Patentinhaber: Magna Car Top Systems GmbH, 74321 Bietigheim-Bissingen (DE)
(72) Erfinder: Sczuka, Markus, 70437 Stuttgart (DE); Reuter, Bärbel, 71638 Ludwigsburg (DE); Epli, Josef, 71706 Markgröningen (DE)

(56) Entgegenhaltungen:
- WO-A1-2009/000226
- DE-A1-102008 015 098
- DE-C1- 4 031 270

## Beschreibung

Die vorliegende Erfindung betrifft ein Fahrzeug mit einer Innenverkleidung, insbesondere ein Cabriolet-Fahrzeug, mit den Merkmalen des Oberbegriffs des Anspruchs 1.

Es sind Faltverdecke für Fahrzeuge bekannt, bei denen eine Innenverkleidung in Form eines Innenhimmels in etwa parallel zum äußeren Verdeckstoff auf der Innenseite des Faltverdecks angebracht ist. Mittels dieser Innenverkleidung sollen Hebel, Lenker, Leitungen und dergleichen verdeckt werden, sowie ein ansprechendes Design der Innenseite des Faltverdecks erreicht werden. Hierbei kann die Innenverkleidung aus mehreren Einzelteilen zusammengesetzt sein, wobei Teile dieser Innenverkleidung über Halteschienen in Randbereichen des Verdecks geklemmt oder mittels Befestigungsmitteln festgelegt sind. Bei der Bewegung des Verdecks von einer Geschlossenstellung in eine Offenstellung müssen sowohl der äußere Verdeckstoff, wie die Innenverkleidung entsprechend eines vorbestimmten Systems gefaltet werden. Hierzu werden sogenannte Faltenleger verwendet, die beim Bewegen des Verdecks den Außenstoff sowie die Innenverkleidung relativ zu bewegenden Lenkern oder Spriegeln in vorbestimmte Positionen ziehen.

Beim Schließen des Verdecks gibt es Bereiche der Innenverkleidung, insbesondere der Innenseitenverkleidungen, welche die extremen Schwenkbewegungen der Lenkerkinematik des Faltverdecks nicht ohne eine Zerstörung des Stoffes der Innenverkleidung überstehen würden. In diesem Fall werden die seitlichen Innenverkleidungen über Zugseile und Gummibänder, die sich im Bereich zwischen der Innenverkleidung und dem äußeren Verdeckstoff befinden in Position gezogen. Damit die Zugseile über mehrere Anbindungsstellen an der seitlichen Innenverkleidung diese in eine gewünschte Position bringen und halten können, werden die Zugseile oft mehrfach durch Ösen oder Umlenkrollen umgelenkt. Zur Erzeugung einer Spannung des Stoffes der Innenverkleidung können, wie schon erwähnt, Gummibänder verwendet werden, welche bei der Bewegung des Faltverdecks von der Offenstellung in die Geschlossenstellung den Stoff der Innenverkleidung spannen, aber über die Längung des Gummibandes ein Zerreißen beziehungsweise sonstige Beschädigen der Innenverkleidung verhindern. Weiter können Federn in den Zugseilen eingebracht sein, so dass sich die Zugseile stets in gespannter Position befinden und der Randbereich der Innenverkleidungen in Form gehalten werden.

Aus der DE 40 31 270 C1 ist ein Klappverdeck für Kraftfahrzeuge, insbesondere für Cabriolets bekannt, bei dem zwischen einem Außenbezug und einem Innenbezug ein Verdeckgestänge aufgenommen ist. Das Verdeckgestänge weist bewegliche Gestängeelemente auf, die beim Öffnungs- beziehungsweise Schließvorgang des Klappverdecks zum Teil mehrfach überlagerte räumliche Bewegungen ausführen können. Um eine Beschädigung des Innen- oder des Außenbezuges zu vermeiden, sowie um ein behinderungsfreies Bewegen des Innenbezugs am Verdeckgestänge zu ermöglichen, ist der Innenbezug beispielsweise an einem ersten Gestängeelement befestigt und an einem zweiten Gestängeelement über Zugmittel geführt. Auf diese Weise kann der Innenbezug relativ zum zweiten Gestängeelement unter ständiger Vorspannung gezogen und gespannt werden.

Die Zugmittel zur Spannung des Innenbezuges können hierbei mittels Umlenkungen über mehrere Gestängeelemente geführt werden, wobei in bestimmten Führungsbereichen die Zugmittel beispielsweise über elastische Elemente, wie Federn oder Gummielemente gehalten werden. Diese elastischen Anbindungen gewährleisten, dass bei geschlossenem Klappverdeck fehlende Längen der Zugmittel kompensiert werden. Die Zugmittel sind an Gestängeelementen befestigt und verlaufen durch Ösen oder sonstige Halterungen des Innenbezuges, so dass dieser entsprechend der Position der Gestängeelemente gehalten beziehungsweise gespannt wird. Beim Öffnen des Klappverdecks kann der Innenbezug über die Zugmittel in vorbestimmte Positionen zur Faltenbildung bei der Ablage der Gestängeelemente und des Innenbezuges positioniert werden.

Ein Verdeck für ein Cabrio-Fahrzeug umfassend einen äußeren Verdeckbezug, sowie ein Verdeckgestänge mit beweglichen Gestängeteilen und einem Innenhimmel ist aus der DE 102 36 511 B3 bekannt. Bei dieser Ausführung wird der Innenhimmel bei einer Schließbewegung des Verdeckgestänges mittels eines kraftübertragenden Steuermittels relativ zum Verdeckgestänge bewegt beziehungsweise gezogen. Das Steuermittel ist vorzugsweise ein Zylinderkolbenaggregat, welches über hydraulische beziehungsweise pneumatische Anschlüsse beaufschlagt und verstellt werden kann. Es ist hierbei von besonderem Vorteil, dass über das Steuermittel sowohl Zugkräfte als auch Schubkräfte übertragen werden können, wobei das Steuermittel bei sich öffnendem Verdeck aktiv den Innenhimmel in eine vorbestimmte Faltenposition bewegt.

Bei sich schließendem Verdeck wird der Innenhimmel über das Steuermittel in eine das Verdeckgestänge verkleidende Position gezogen, wobei die Zugkräfte und die auf den Innenhimmel übertragenen Bewegungen an die maximalen Abmessungen des Innenhimmels angepasst sind. Seitliche Bereiche des Innenhimmels können beispielsweise Anschlussklappen oder Halteschienen aufweisen, die über Bautenzüge, welche mit dem Steuermittel verbunden sind, entsprechend der Gestängebewegung beaufschlagt werden. Auf diese Weise können über das Steuermittel sowohl Bereiche der Innenverkleidung, wie auch Klappenelemente zum Durchtritt von Gestängeteilen betätigt werden.

In der DE 10 2005 020 650 A1 ist ein Verdeck für Kraftfahrzeuge, insbesondere für Cabriolets oder dergleichen beschrieben. Das Verdeck kann zwischen einer Offenstellung und einer Geschlossenstellung mittels einer Verdeckkinematik bewegt werden, wobei die Verdeckkinematik zwischen einem Außenbezug und einem Innenbezug aufgenommen ist. In bestimmten Bereichen des Innenbezuges, vorzugsweise in Randbereichen des Innenbezuges, weist dieser Verstärkungselemente auf, die mit dem Innenbezug fest verbunden sind. Über Zugmittel die an den Verstärkungselementen befestigt sind, kann der Innenbezug bei geschlossenem Fahrzeugdach gemeinsam mit den Verstärkungselementen an wenigstens einem der Gestängeteile anliegen, wobei die Verdeckkinematik gegenüber dem Fahrzeuginnenraum durch den Innenbezug vollständig abgedeckt wird.

Das Verstärkungselement weist wenigstens ein Führungselement auf, welches an dem Verstärkungselement einstückig angebracht ist. Bei geschlossenem Verdeck wird das Verstärkungselement durch den Verdeckstoff und den Zugmitteln gegen ein Gestängeteil gedrückt, wobei das Verstärkungselement und das Führungselement jeweils mit einer Fläche an dem Gestängeteil anliegen.

Aus der DE 10 2008 015 098 A1 ist es bekannt, bei einem Verdeck eine Innenverkleidung endseitig mit einem Keder in einem Umgriff zu fixieren.

Die vorliegende Erfindung beschäftigt sich mit dem Problem, für eine Führung einer Innenverkleidung der eingangs genannten Art bzw. für ein damit ausgestattetes Fahrzeug eine Ausführungsform anzugeben, die sich insbesondere dadurch auszeichnet, dass sie vergleichsweise einfach montierbar ist und die Innenverkleidung in ihrer Lage verändert werden kann.

Dieses Problem wird erfindungsgemäß durch dun Gegenstand des unabhängigen Anspruchs gelöst. Vorteilhafte Ausführungsformen sind Gegenstand der abhängigen Ansprüche.

Die Erfindung beruht auf dem allgemeinen Gedanken, dass bei einem zwischen einer Offenstellung und einer Geschlossenstellung verstellbaren Verdeck, der dem Fahrzeuginnenraum zugewandte Bereich des Verdecks mittels eines Stoffs verkleidet werden soll. Diese Innenverkleidung, auch Innenhimmel genannt, besteht in der Regel aus mehreren Teilen, wobei der dem Dach zugewandte Bereich über Binder und Bänder mit dem Verdeck oder mit Spriegeln und Lenkern verbunden ist. Im Seitenbereich des Verdecks sind die Dachseitenträger, sowie die C-Säulen mit einer Innenverkleidung zu verkleiden, damit bei geschlossenem Verdeck die Gestänge und Lenker durch die Innenverkleidung überdeckt sind. Hierbei ist die Innenverkleidung der C-Säule als ein relativ großes flächiges Stoffteil ausgelegt, welches im Bereich dessen dem Dachteil zugewandten Innenhimmels mit diesem verbunden oder von dessen Randbereich überlappt wird. Bei sich öffnendem Verdeck schwenkt die C-Säule beziehungsweise die Dachseitenträger und Lenker der Verdeckkinematik so, dass die Innenverkleidung der C-Säule von ihren Abmessungen und Nachgiebigkeit nicht folgen kann. Als Folge hiervon würde die Innenverkleidung der C-Säule beschädigt werden, beziehungsweise würde bei häufiger starker Dehnung der Stoff der Innenverkleidung ausleiern und somit die Lebensdauer erheblich reduzieren.

Zusätzlich erschwerend kommt hinzu, dass die Innenverkleidung der C-Säule im Randbereich der C-Säule der meistens gekrümmten Kontur der C-Säule folgen muss, was nur schwer bei einem gespannten Stoff abzubilden ist. Im Randbereich der C-Säule, sowie dem Fahrgastinnenraum zugewandt, weist die C-Säule eine Führungsschiene auf, die in Kontur und Verlauf dem der C-Säule entspricht. Die Führungsschiene ist vorteilhaft mit der C-Säule fest verbunden und weist zur Innenverkleidung der C-Säule weisend eine Führung mit Umgriff auf. Im Bereich des Umgriffs verläuft der dem Seitenfenster zugewandte Randbereich der Innenverkleidung der C-Säule, welcher innerhalb des Umgriffes in der Führungsschiene geführt wird. Hierzu ist im Randbereich der Innenverkleidung ein Keder eingefügt, der zusammen mit dem umgreifenden Stoff der Innenverkleidung den Innenabmessungen des Umgriffs der Führungsschiene entspricht.

Bei sich öffnendem Verdeck, kann durch den im Umgriff aufgenommenen Randbereich der Innenverkleidung die Innenverkleidung entlang der Führungsschiene verschoben werden, wobei die Verschiebung den geforderten Abmessungen der Schwenkbewegung angemessen ist. Bei sich schließendem Verdeck, wird die Innenverkleidung der C-Säule mittels eines Zugseils, dass im Eckbereich der Innenverkleidung der C-Säule angebracht ist in Richtung der Gürtellinie der Seitenfenster gezogen. Die Innenverkleidung der C-Säule gleitet somit in der Führungsschiene in ihre Position mit der die C-Säule, sowie Teile des Dachseitenträgers und der Lenkerkinematik überspannt werden können.

Eine weitere Variante besteht darin, dass im Randbereich der Innenverkleidung der C-Säule Führungskörper angenäht sein können, welche in den Umgriff der Führungsschiene eingreifen. Diese Führungskörper werden bei sich öffnendem Verdeck innerhalb der Führungsschiene verschoben, wobei zwischen den Führungskörpern und dem Randbereich der Innenverkleidung der C-Säule eine elastische Anbindung möglich ist. Auch ist es denkbar, dass derartige Führungsschienen nicht nur im Bereich der C-Säule, sondern auch in Bereichen des Dachseitenträgers beziehungsweise im Übergangsbereich zum Innenhimmel des Verdecks angeordnet sein können, womit die gesamte Innenverkleidung der C-Säule entlang Führungsschienen verschiebbar angeordnet ist.

Um den Teil des Umgriffs der zum Seitenfenster weisend hervorsteht ebenfalls mit der Innenverkleidung der C-Säule abdecken zu können, ist es möglich, dass im der Führungsschiene zugewandten Randbereich der Innenverkleidung der C-Säule eine Stofflippe hervorragt oder ein lippenähnliches Bauteil, beispielsweise aus einem Elastomer mit in die Innenverkleidung der C-Säule eingenäht ist. Die Verwendung einer derartigen Führungsschiene ist weiterhin von Vorteil, da diese Führungsschienen mittels Befestigungselementen, wie beispielsweise Schrauben, an der C-Säule befestigt werden und somit über die Verschraubungen und den Durchlassbohrungen der Führungsschiene in einem gewissen Rahmen relativ zur C-Säule eingestellt werden kann.

Die Führungsschiene kann aus einem Aluminiumprofil hergestellt sein und entsprechend der Form und Kontur der C-Säule gebogen werden. Auch ist es denkbar, dass die Führungsschiene ein aus Kunststoff gespritztes Bauteil ist und entsprechend der Farbe der Innenverkleidung der C-Säule eingefärbt wird. Das beim Schließen des Verdecks die Innenverkleidung der C-Säule in ihrer Endlage ziehende Zugseil ist beispielsweise im hinteren Bereich der Karosserie oder an einem Lenker der Lenkerkinematik befestigt. Als Überlastungsschutz der verschiebbaren Innenverkleidung kann das Zugseil im Anbindungsbereich zur Karosserie oder einem Lenker mittels eines elastischen Elements oder einer Feder befestigt sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Innenansicht der mit einer Innenverkleidung versehenen C-Säule bei geschlossenem Verdeck,
- Fig. 2: eine Innenansicht der mit einer teilweise verschobenen Innenverkleidung versehenen C-Säule bei teilweise geöffnetem Verdeck,
- Fig. 3: den oberen Eintrittsbereich der Führungsschiene mit teilweise herausgezogener Innenverkleidung der C-Säule,
- Fig. 4: den unteren Bereich der Führungsschiene mit teilweise verschobener Innenverkleidung der C-Säule und Zugseil,
- Fig. 5: einen Schnitt durch die Führungsschiene mit Keder und Innenverkleidung der C-Säule.

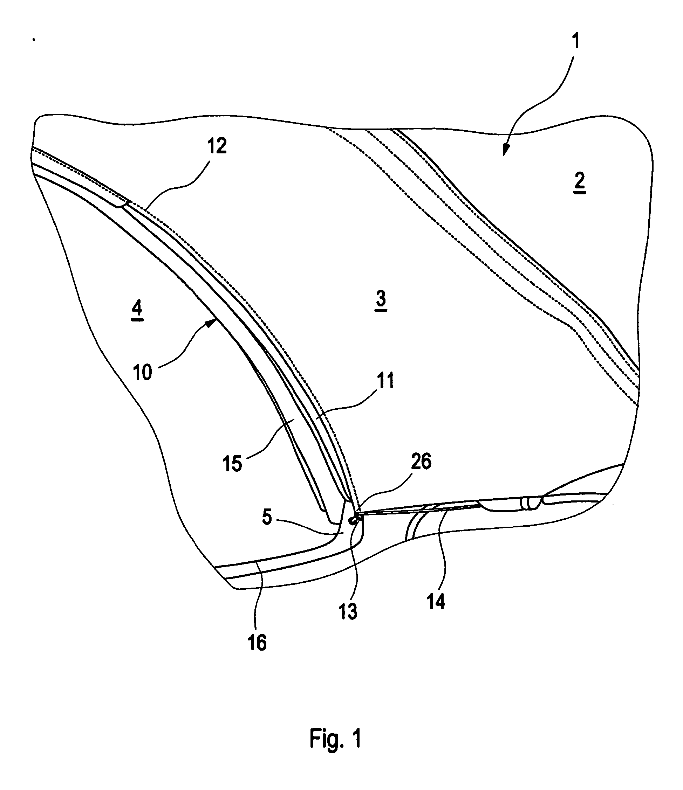

In Figur 1 ist eine Innenansicht der mit der Innenverkleidung 3 versehenen-C-Säule 5 bei geschlossenem Verdeck 1 abgebildet. Die Innenverkleidung 3 der C-Säule 5 ist hier beispielsweise am hinteren Dachteil 2 des Verdecks 1 befestigt. Diese Befestigung kann mittels eines Klettbands oder sonstiger Befestigungsmittel erfolgen. Ein in Figur 1 nicht dargestellter Innenhimmel überlappt den dem hinteren Dachteil 2 zugewandten Bereich der Innenverkleidung 3 der C-Säule 5, so dass ein homogenes Erscheinungsbild entsteht. Auch ist es denkbar, dass die Innenverkleidung 3 mit dem Innenhimmel im Übergangsbereich zu einem einstückigen Teil vernäht ist und am Verdeck 1 gehalten wird.

Im Bereich des Seitenfensters 4 ist die C-Säule 5 mit einer Dichtung 15 versehen, die einen Spalt als Aufnahmebereich 30 für die Seitenscheibe 4 aufweist. Zum Fahrzeuginnenraum weisend wird die Dichtung 15 von einem Umgriff 11 einer Führungsschiene 10 begrenzt, wobei in dem Umgriff 11 der dem Seitenfenster 4 zugewandte Endbereich der Innenverkleidung 3 aufgenommen und geführt wird. Hierzu ist der Endbereich der Innenverkleidung 3 mit einem Keder 24 versehen, welcher von der Innenverkleidung 3 umgriffen wird und zusammen mit der umgriffenen Innenverkleidung 3 den Innenabmessungen des Umgriffs 11 entspricht. Im Eckbereich der Innenverkleidung 3, nahe des Schnittpunktes der C-Säule 5 mit der Gürtellinie 16, ist ein Zugseil 14 über eine Anbindung 26 an der Innenverkleidung 3 befestigt. Das Zugseil 14 ist mit seinem freien Ende beispielsweise im hinteren Bereich der Karosserie angebracht und zieht die Innenverkleidung 3 bei sich schließendem Verdeck 1 in ihre die Lenkerkinematik übergreifende Endlage hinein. Hierzu wird das Zugseil 14 über eine Umlenköse 13 die im Eckbereich der C-Säule 5 angebracht ist umgelenkt.

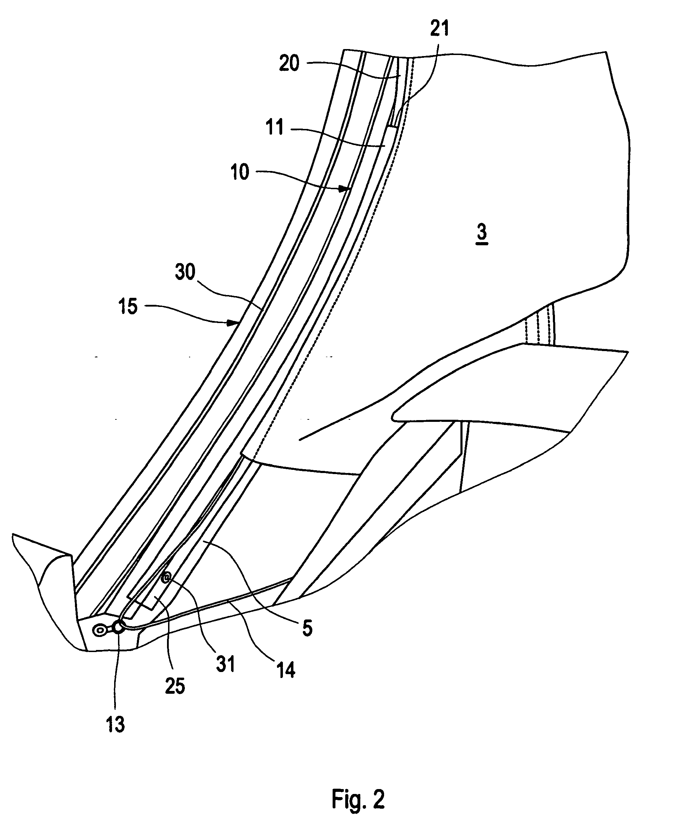

Figur 2 zeigt eine Innenansicht der mit einer teilweise verschobenen Innenverkleidung 3 versehenen C-Säule 5, bei teilweise geöffnetem Verdeck 1. Hierbei ist der dem Seitenfenster 4 zugewandte Randbereich der Innenverkleidung 3 teilweise innerhalb des Umgriffs 11 in die Richtung eines nicht abgebildeten Dachseitenträgers verschoben. Die hierzu notwendige Zugbeanspruchung der Innenverkleidung 3 entsteht dadurch, dass die Innenverkleidung 3 in einem vorderen Bereich des Verdecks 1 befestigt ist und bei sich nach hinten schwenkender C-Säule 5 durch die entstehende Zugkraft in der Innenverkleidung 3 entsprechend verschoben wird.

Die Führungsschiene 10 ist mittels Verschraubungen 31 oder sonstigen geeigneten Befestigungsmitteln 31 auf der dem Fahrzeuginnenraum zugewandten Seite der C-Säule 5 befestigt. Entsprechend dem Verschiebeweg der Innenverkleidung 3 bei sich öffnendem Verdeck 1 wird das Zugseil 14 über die Umlenköse 13 der Innenverkleidung 3 nachgeführt. Am oberen Ende der Führungsschiene 10 weist diese einen Eintritt 21 auf, aus dem wie in Figur 2 ersichtlich, ein Teil der Innenverkleidung 3 mit dem Umgriff 20 des Keders 24 austritt. Bei sich wieder schließendem Verdeck 1 wird dieser Umgriff 20 des Keders 24 über den Eintritt 21 wieder in die Führungsschiene 10 eingeschoben.

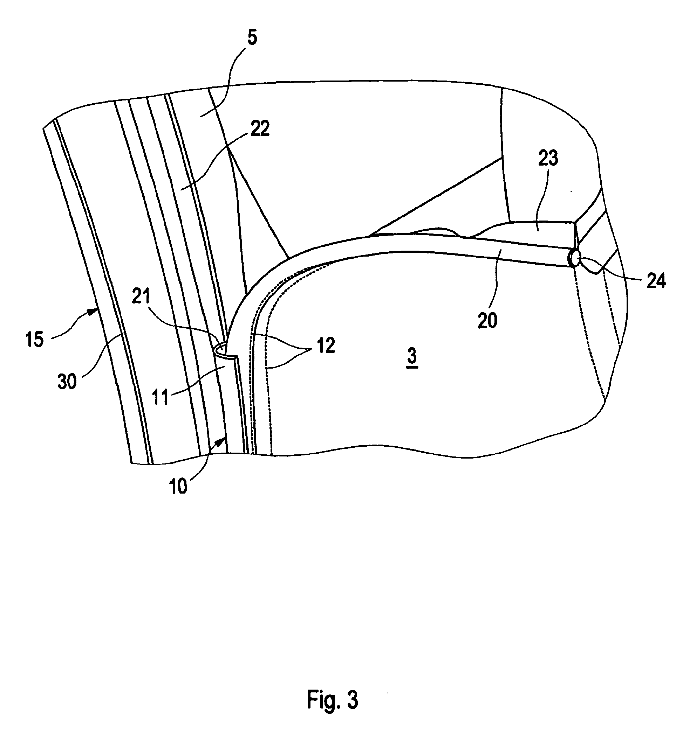

In Figur 3 ist eine Vergrößerung des oberen Eintrittbereichs der Führungsschiene 10 mit teilweise herausgezogener Innenverkleidung 3 der C-Säule 5 abgebildet. Die Führungsschiene 10 ist hierbei über die Befestigungsmittel 31 in einem Anlagebereich 22 der C-Säule 5 aufliegend befestigt. Selbstverständlich ist es möglich, dass im Anlagebereich 22 zwischen der C-Säule 5 und der Führungsschiene 10 ein Dichtungsmittel in Form eines flachen elastischen Bandes oder einer aufschäumenden Dichtung eingebracht werden kann. Diese Maßnahme ist dazu geeignet, ein mögliches Eindringen von Feuchtigkeit im Befestigungsbereich der Führungsschiene 10 zur C-Säule 5 zu verhindern.

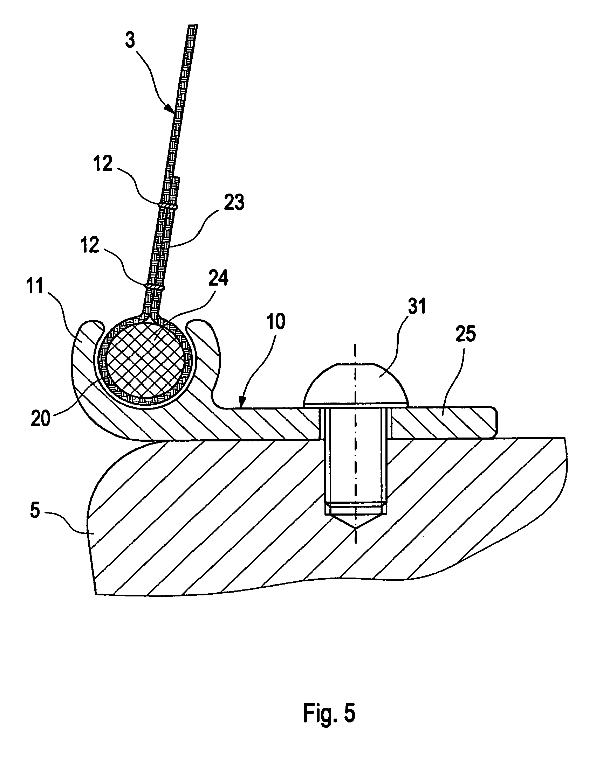

Der Umgriff 11 der Führungsschiene 10 ist wie auch in Figur 5 ersichtlich klauenförmig ausgebildet, wobei ein Keder 24, der von der Innenverkleidung 3 in einem Umgriff 20 umschlossen ist im Umgriff 11 verschiebbar aufgenommen wird. Der Umgriff 20 des Keders 24 ist als Stoffumschlag 23 ausgeführt, der im direkten Umgriffsbereich des Keders 24 mit einer Naht 12 fixiert wird. Selbstverständlich ist es möglich, dass der Eintritt 21 der Führungsschiene 10 mit Eintrittsschrägen ausgebildet ist, um ein möglichst einfaches und leichtes Einführen des mit der Innenverkleidung 3 umgriffenen Keders 24 zu ermöglichen.

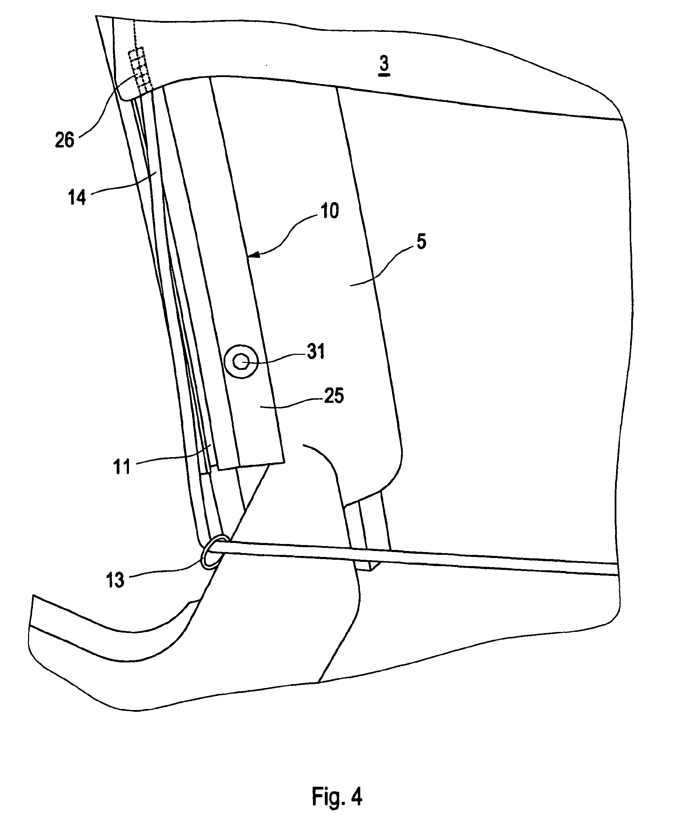

Die Figur 4 zeigt den unteren Bereich der Führungsschiene 10 mit teilweise verschobener Innenverkleidung 3 der C-Säule 5, sowie dem Zugseil 14. Im Anbindungsbereich 26 zwischen der Innenverkleidung 3 und dem Zugseil 14 wird der Keder 24 durch die Innenverkleidung 3 umgriffen. Während der von der Innenverkleidung 3 umgriffene Keder 24 im Umgriff 11 der Führungsschiene 10 verschiebbaraufgenommen ist, ist das Zugseil 14 direkt oberhalb des Umgriffs 11 verlaufend angeordnet. Das Zugseil 14 wird sowohl bei sich öffnendem, wie auch schließendem Verdeck 1 über die Umlenköse 13 umgelenkt, wobei die Umlenköse 13 nahe des Umgriffs 11 an der C-Säule 5 befestigt ist. Diese Befestigung ist zwingend notwendig, damit das Zugseil 14 beim Verschieben der Innenverkleidung 3 stets gleich beabstandet zum Umgriff 11 der Führungsschiene 10 verläuft.

Die Führungsschiene 10 ist mit einem seitlichen Flansch 25 ausgebildet, der in seinen Abmessungen und Formgestaltungen dem Verlauf der C-Säule 5 entspricht. Mittels einer Verschraubung 31 oder anderen geeigneten Befestigungsmitteln, wie Clipsen, Nieten oder dergleichen wird der seitliche Flansch 25 an der C-Säule 5 befestigt. Selbstverständlich ist es möglich, dass die Führungsschiene 10 einstückig aus der C-Säule 5 ausgebildet werden kann. Jedoch scheint es vorteilhaft zu sein, die Führungsschiene 10 als separates Bauteil über Befestigungsmittel 31 an der C-Säule 5 anzubringen. Bei der Verwendung eines Befestigungsmittels 31 als Schraube ausgelegt zeigt sich vorteilhaft, dass die Führungsschiene 10 relativ zur C-Säule 5 entsprechend den Durchgangsbohrungen der Führungsschiene 10 eingestellt werden kann.

Eine weitere Variante besteht darin, dass die Führungsschiene 10 mit ihrem Umgriff 11 beispielsweise mit einem Trägerflansch der Dichtung 15 kombiniert wird, so dass zumindest eine teilweise Befestigung der Dichtung 15 über die Führungsschiene 10 erfolgt.

Einen Schnitt durch die Führungsschiene 10 mit Keder 24 und Innenverkleidung 3 ist in Figur 5 abgebildet. Hierbei ist der seitliche Flansch 25 mittels einer Verschraubung 31 an der C-Säule 5 positioniert und fixiert. Der als Umgriff 11 ausgebildete Randbereich der Führungsschiene 10 umgreift den mit der Innenverkleidung 3 umgriffenen Keder 24 so, dass der Keder 24 mit der Innenverkleidung 3 nicht aus dem Umgriff 11 herausrutschen kann. Jedoch ist der Umgriff 10 um den Keder 24 des Verdeckstoffs 3 so ausgelegt, dass zwischen der Innenwand des Umgriffs 11 genügend Spiel vorhanden ist, damit die Innenverkleidung 3 entlang der Führungsschiene 10 zu verschieben ist. Der Stoffumschlag 23 der Innenverkleidung 3 wird beispielsweise über wenigstens eine Naht 12 im Bereich direkt hinter dem Keder 24 befestigt.

Die Verwendung eines Kunststoffs für die Führungsschiene 10 kann die bei der Verschiebung der Innenverkleidung 3 im Umgriff 11 entstehenden Reibung beeinflussen. Auch kann bei der Verwendung eines Kunststoffs für die Führungsschiene 10 dieser, entsprechend der Farbe der Innenverkleidung 3, eingefärbt und angepasst werden.

### Bezugszeichenliste

| | |
|---|---|
| 1 | Verdeck |
| 2 | Dach, hinteres Dachteil |
| 3 | Innenverkleidung C-Säule |
| 4 | Seitenfenster |
| 5 | C-Säule |
| | |
| 10 | Führungsschiene |
| 11 | Umgriff |
| 12 | Naht |
| 13 | Umlenkung, Umlenköse |
| 14 | Zugseil |
| 15 | Dichtung |
| 16 | Gürtellinie |
| | |
| 20 | Umgriff Keder |
| 21 | Eintritt Umgriff |
| 22 | Anlagebereich für Führungsschiene |
| 23 | Stoffumschlag |
| 24 | Keder |
| 25 | seitlicher Flansch |
| 26 | Anbindung Zugseil |
| | |
| 30 | Aufnahmebereich für Seitenscheibe |
| 31 | Verschraubung, Schraube |

## Patentansprüche

1. Fahrzeug mit einer Innenverkleidung (3),
- wobei die Innenverkleidung (3) wenigstens teilweise die C-Säule (5), sowie den Bereich zwischen der C-Säule (5) und einem hinteren Dachteil (2) verdeckt,
- wobei im Bereich zwischen der C-Säule (5) und einem hinteren Dachteil (2) Lenker einer Verdeckkinematik angeordnet sind,
- wobei der dem Seitenfenster (4) zugewandte Randbereich der Innenverkleidung (3) in Form und Verlauf der C-Säule (5) entspricht,
- wobei die Innenverkleidung (3) mittels eines Zugseils (14) in die den Bereich zwischen der C-Säule (5) und einem hinteren Dachteil (2) verdeckende Endlage gezogen und gespannt werden kann,
**dadurch gekennzeichnet,**
**dass** der dem Seitenfenster (4) zugewandte Randbereich der Innenverkleidung (3) in einem Umgriff (11) einer Führungsschiene (10) verschiebbar aufgenommen ist.

2. Fahrzeug nach Anspruch 1,
**dadurch gekennzeichnet,**
**dass** die Führungsschiene (10) in Krümmung und Verlauf dem der C-Säule (5) entspricht.

3. Fahrzeug nach Anspruch 1 oder 2,
**dadurch gekennzeichnet,**
**dass** die Führungsschiene (10) über einen seitlichen Flansch (25) und Befestigungsmitteln (31) an der C-Säule (5) befestigt ist.

4. Fahrzeug nach den Ansprüchen 1 bis 3,
**dadurch gekennzeichnet,**
**dass** die Befestigungsmittel (31) zur Befestigung der Führungsschiene (10) an der C-Säule (5) Schrauben, Nieten oder Clipse sind.

5. Fahrzeug nach den Ansprüchen 1 bis 4,
**dadurch gekennzeichnet,**
**dass** die Führungsschiene (10) aus Metall oder aus einem Kunststoff besteht.

6. Fahrzeug nach einem der vorhergehenden Ansprüche,
**dadurch gekennzeichnet,**
**dass** die Eintritts- und Austrittsbereiche des Umgriffs (11) der Führungsschiene (10) mit trichterförmigen Erweiterungen ausgeführt sind.

7. Fahrzeug nach einem der vorhergehenden Ansprüche,
**dadurch gekennzeichnet,**
**dass** der Umgriff (11) klauenförmig ausgeführt ist und das der klauenförmige Umgriff (11) kreisförmig mit einem Umgriffswinkel größer 180 Winkelgraden ausgelegt ist.

8. Fahrzeug nach den Ansprüchen 1 und 7,
**dadurch gekennzeichnet,**
**dass** der im Umgriff (11) aufgenommene Randbereich der Innenverkleidung (3) als einem von der Innenverkleidung (3) umgriffenen Keder (24) ausgeführt ist.

9. Fahrzeug nach einem oder mehreren der vorangehenden Ansprüche,
**dadurch gekennzeichnet,**
**dass** das Zugseil (14) im Heckbereich der Karosserie befestigt ist und die Anbindung des Zugseils (14) so gewählt ist, dass bei sich öffnenden Verdeck (1) die Verschiebung der Innenverkleidung (3) im Umgriff (11) der Führungsschiene (10) der Nachgiebigkeit des Zugseils (14) entspricht.

10. Fahrzeug nach einem oder mehreren der vorangehenden Ansprüche,
**dadurch gekennzeichnet,**
**dass** das Zugseil (14) mit der Anbindung (26) im Endbereich der im Umgriff (11) aufgenommenen Innenverkleidung (3) befestigt ist und das Zugseil (14) dicht beabstandet über dem Umgriff (11) verläuft.

## Claims

1. Vehicle with a trim cover (3),
- wherein the trim cover (3) at least partially covers the C pillar (5) and also the region between the C pillar (5) and a rear roof part (2),
- wherein links of a folding top mechanism are arranged in the region between the C pillar (5) and a rear roof part (2),
- wherein that edge region of the trim cover (3) which faces the side window (4) corresponds in shape and profile to the C pillar (5),
- wherein the trim cover (3) can be pulled and tensioned by means of a pull cable (14) into the end position covering the region between the C pillar (5) and a rear roof part (2),
**characterized in that** that edge region of the trim cover (3) which faces the side window (4) is accommodated displaceably in a wrap-around (11) of a guide rail (10).

2. Vehicle according to Claim 1, **characterized in that** the guide rail (10) corresponds in curvature and profile to that of the C pillar (5).

3. Vehicle according to Claim 1 or 2, **characterized in that** the guide rail (10) is fastened to the C pillar (5) via a lateral flange (25) and fastening means (31).

4. Vehicle according to Claims 1 to 3, **characterized in that** the fastening means (31) for fastening the guide rail (10) to the C pillar (5) are screws, rivets or clips.

5. Vehicle according to Claims 1 to 4, **characterized in that** the guide rail (10) is composed of metal or of a plastic.

6. Vehicle according to one of the preceding claims, **characterized in that** the entry and exit regions of the wrap-around (11) of the guide rail (10) are designed with funnel-shaped widenings.

7. Vehicle according to one of the preceding claims, **characterized in that** the wrap-around (11) is of claw-shaped design and **in that** the claw-shaped wrap-around (11) is configured in a circular manner with a wrap-around angle of greater than 180 degrees of angle.

8. Vehicle according to Claims 1 and 7, **characterized in that** that edge region of the trim cover (3) which is accommodated in the wrap-around (11) is designed as a piping (24) around which the trim cover (3) is wrapped.

9. Vehicle according to one or more of the preceding claims, **characterized in that** the pull cable (14) is fastened in the rear region of the body, and the connection of the pull cable (14) is selected in such a manner that, as the folding top (1) opens, the displacement of the trim cover (3) in the wrap-around (11) of the guide rail (10) corresponds to the flexibility of the pull cable (14).

10. Vehicle according to one or more of the preceding claims, **characterized in that** the pull cable (14) is fastened by the connection (26) in the end region of the trim cover (3) accommodated in the wrap-around (11), and the pull cable (14) runs over the wrap-around (11) at a close distance therefrom.

## Revendications

1. Véhicule comprenant un habillage intérieur (3),
- l'habillage intérieur (3) recouvrant au moins partiellement le montant C (5) ainsi que la région entre le montant C (5) et une partie de toit arrière (2),
- des bras oscillants d'une cinématique de capote étant disposés dans la région entre le montant C (5) et une partie de toit arrière (2),
- la région de bord, tournée vers la fenêtre latérale (4), de l'habillage intérieur (3) correspondant au montant C (5) de par sa forme et de par son étendue,
- l'habillage intérieur (3) pouvant, au moyen d'un câble de traction (14), être tiré et tendu dans la position finale recouvrant la région entre le montant C (5) et une partie de toit arrière (2),
**caractérisé en ce que** la région de bord, tournée vers la fenêtre latérale (4), de l'habillage intérieur (3) est reçue de manière déplaçable dans un élément d'engagement périphérique (11) d'un rail de guidage (10).

2. Véhicule selon la revendication 1,
**caractérisé en ce que**
le rail de guidage (10) correspond au montant C (5) de par sa courbure et de par son étendue.

3. Véhicule selon la revendication 1 ou 2,
**caractérisé en ce que**
le rail de guidage (10) est fixé au montant C (5) au moyen d'un rebord latéral (25) et de moyens de fixation (31).

4. Véhicule selon les revendications 1 à 3,
**caractérisé en ce que**
les moyens de fixation (31) pour la fixation du rail de guidage (10) au montant C (5) sont des vis, des rivets ou des clips.

5. Véhicule selon les revendications 1 à 4,
**caractérisé en ce que**
le rail de guidage (10) est constitué de métal ou d'une matière plastique.

6. Véhicule selon l'une quelconque des revendications précédentes,
**caractérisé en ce que**
les régions d'entrée et de sortie de l'élément d'engagement périphérique (11) du rail de guidage (10) sont réalisés avec des élargissements en forme d'entonnoirs.

7. Véhicule selon l'une quelconque des revendications précédentes,
**caractérisé en ce que**
l'élément d'engagement périphérique (11) est réalisé en forme de griffe et **en ce que** l'élément d'engagement périphérique (11) en forme de griffe est conçu de manière circulaire avec un angle d'engagement périphérique supérieur à 180 degrés.

8. Véhicule selon les revendications 1 et 7,
**caractérisé en ce que**
la région de bord, reçue dans l'élément d'engagement périphérique (11), de l'habillage intérieur (3) est réalisée sous forme de bourrelet (24) autour duquel vient en prise l'habillage intérieur (3).

9. Véhicule selon l'une quelconque ou plusieurs des revendications précédentes,
**caractérisé en ce que**
le câble de traction (14) est fixé dans la région arrière de la carrosserie et le raccordement du câble de traction (14) est sélectionné de telle sorte que, lorsque la capote (1) s'ouvre, le déplacement de l'habillage intérieur (3) dans l'élément d'engagement périphérique (11) du rail de guidage (10) corresponde à la flexibilité du câble de traction (14).

10. Véhicule selon l'une quelconque ou plusieurs des revendications précédentes,
**caractérisé en ce que**
le câble de traction (14) est fixé à l'aide du raccordement (26) dans la région d'extrémité de l'habillage intérieur (3) reçu dans l'élément d'engagement périphérique (11) et le câble de traction (14) s'étend de manière étanche à distance au-dessus de l'élément d'engagement périphérique (11).
